# EUROPEAN PATENT APPLICATION

(11) **EP 4 835 836 A1**
(43) Date of publication of application: **04.11.2026**
(21) Application number: 25172916.6
(22) Date of filing: 28.04.2025
(51) Int. Cl.: G06V 10/56, G06V 10/774, G06V 10/80, G06V 10/82, G06V 20/56

(54) **AUTOMATED ANNOTATION OF ROAD MODEL FOR AUTOMATED DRIVING SYSTEMS**

(71) Applicant: VOLVO CAR CORPORATION, 405 31 Göteborg (SE)
(72) Inventor: HUANG, Binru, 423 41 Torslanda (SE); FU, Junsheng, 449 35 Nödinge (SE); LIN, Che-Tsung, 413 11 Göteborg (SE); LIU, Jianan, 438 35 Landvetter (SE)
(74) Representative: Zacco Sweden AB

(57) **Abstract**

A method for generating road model annotations for automated driving systems and related aspects are disclosed. The method comprises obtaining a first dataset comprising 3D polyline annotations of a set of road model objects in a specified environment. The first dataset comprises 3D point clouds represented in a 3D space, captured by a LiDAR device over a time period in the specified environment, indicative of a presence of the set of road model objects. The method further comprises obtaining a second dataset comprising one or more camera images depicting the specified environment over the time period, and selecting a subset of camera images from the one or more camera images based on the first dataset. The method further comprises generating a prompt to a trained foundation model. The prompt comprises an instruction for the trained foundation model to assign a property of each road model object that is annotated in the obtained first dataset, and the instruction is automatically generated based on the obtained first dataset. The method further comprises feeding the selected subset of camera images of the second dataset to the trained foundation model, feeding the generated prompt to the trained foundation model, and parsing an output from the trained foundation model. The output is parsed to generate a file in a structured data interchange format, where the file comprises annotations indicative of the assigned property of each road model object of the set of road model objects, and one or more annotated images comprising annotations indicative of the assigned property of each road model object of the set of road model objects in the one or more camera images.

## Description

### TECHNICAL FIELD

The disclosed technology relates to methods and systems for generating road model annotations for automated driving systems. In particular, but not exclusively the disclosed technology relates to leveraging trained foundation models for automatically generating property annotations of road model objects from 3D polyline annotations.

### BACKGROUND

Automated driving systems have garnered significant attention in recent years, with increasing levels of autonomy being deployed in consumer vehicles. These systems rely on an array of sensors, computing platforms, and control algorithms to perceive the vehicle's surroundings, plan driving manoeuvres, and execute corresponding actions in real time. As the industry advances from driver-assist functionalities (e.g., adaptive cruise control and lane-keeping) toward higher levels of autonomy (Levels 3, 4, or 5 according to SAE International standards), safety and reliability remain paramount objectives.

Automated driving systems rely on various sensors (e.g., cameras, LiDAR, radar) to perceive and interpret the vehicle's surrounding environment. Lane detection is one of the critical perception tasks necessary for automated driving features such as lane-keeping, adaptive cruise control, and highway autopilot. Accurate lane detection requires substantial amounts of well-annotated training data so that machine learning models can robustly identify and track lane-markers in diverse driving conditions.

Traditionally, annotating road model objects, such as lane-markers, in raw sensor data has been a labour-intensive process handled manually. Annotators would review image or sensor frames, outline the lane boundaries, and label each boundary segment for subsequent training of perception algorithms. Manual annotation poses significant challenges in terms of time-consumption, costs, and managing inconsistencies and accuracy.

Therefore, there remains a need for improved systems and methods to efficiently generate accurate annotations of road model objects, such as lane-delimiters (also referred to as lane-markers) in large datasets.

### SUMMARY

The herein disclosed technology seeks to mitigate, alleviate or eliminate one or more of the above-identified deficiencies and disadvantages in the prior art to address various problems relating to time-consumption and costs of providing annotations of the properties of various road model objects.

Various aspects and embodiments of the disclosed technology are defined below and in the accompanying independent and dependent claims.

A first aspect of the disclosed technology comprises a computer-implemented method for generating road model annotations for automated driving systems. The computer-implemented method comprises obtaining a first dataset comprising 3D polyline annotations of a set of road model objects in a specified environment. The first dataset comprises 3D point clouds represented in a 3D space, captured by a LiDAR device over a time period in the specified environment, indicative of a presence of the set of road model objects. The method further comprises obtaining a second dataset comprising one or more camera images depicting the specified environment over the time period, and selecting a subset of camera images from the one or more camera images based on the first dataset. The method further comprises generating a prompt to a trained foundation model. The prompt comprises an instruction for the trained foundation model to assign a property of each road model object that is annotated in the obtained first dataset, and the instruction is automatically generated based on the obtained first dataset. The method further comprises feeding the selected subset of camera images of the second dataset to the trained foundation model, feeding the generated prompt to the trained foundation model, and parsing an output from the trained foundation model. The output is parsed to generate a file in a structured data interchange format, where the file comprises annotations indicative of the assigned property of each road model object of the set of road model objects, and one or more annotated images comprising annotations indicative of the assigned property of each road model object of the set of road model objects in the one or more camera images.

A second aspect of the disclosed technology comprises a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for generating road model annotations for automated driving systems. The system comprises one or more processors and one or more memory storage areas comprising program code, where the one or more memory storage areas and the program code are configured to, with the one or more processors, cause the system to obtain a first dataset comprising 3D polyline annotations of a set of road model objects in a specified environment. The first dataset comprises 3D point clouds represented in a 3D space, captured by a LiDAR device over a time period in the specified environment, indicative of a presence of the set of road model objects. The one or more memory storage areas and the program code are further configured to, with the one or more processors, cause the system to obtain a second dataset comprising one or more camera images depicting the specified environment over the time period, and select a subset of camera images from the one or more camera images based on the first dataset. The one or more memory storage areas and the program code are further configured to, with the one or more processors, cause the system to generate a prompt to a trained foundation model. Here, the prompt comprises an instruction for the trained foundation model to assign a property of each road model object that is annotated in the obtained first dataset, and the instruction is automatically generated based on the obtained first dataset. The one or more memory storage areas and the program code are further configured to, with the one or more processors, cause the system to feed the selected subset of camera images of the second dataset to the trained foundation model, feed the generated prompt to the trained foundation model, and parse an output from the trained foundation model. The output is parsed to generate a file in a structured data interchange format, where the file comprises annotations indicative of the assigned property of each road model object of the set of road model objects, and one or more annotated images comprising annotations indicative of the assigned property of each road model object of the set of road model objects in the one or more camera images. With this aspect of the disclosed technology, similar advantages and preferred features are present as in the other aspects.

A fifth aspect of the disclosed technology comprises a server comprising the system according to any one of the embodiments of the fourth aspect disclosed herein. With this aspect of the disclosed technology, similar advantages and preferred features are present as in the other aspects.

A sixth aspect of the disclosed technology comprises a cloud environment comprising one or more remote servers according to any one of the embodiments of the fifth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that significant time saving can be achieved for generating large annotated datasets of road model objects that can be used to train various models of an automated driving system.

An advantage of some embodiments is that large datasets of accurately annotated datasets of road model objects can be obtained, thereby providing means to improve and/or verify machine-learning algorithms, and in particular machine-learning algorithms used for perceiving and understanding road geometry.

An advantage of some embodiments is that the performance and robustness of the models used for understanding road geometry in Automated Driving Systems can be improved in a faster and more cost effective way due to the larger amount of training data becoming available.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for generating road model annotations for automated driving systems in accordance with some embodiments.
Fig. 2 are two 3D point cloud scans from a top-view perspective, one without 3D polyline annotations and one with 3D polyline annotations.
Fig. 3 is a schematic block diagram representation of a system for generating road model annotations for automated driving systems in accordance with some embodiments.
Fig. 4 is a schematic block diagram representation of a system for generating road model annotations for automated driving systems, and schematic illustrations of a server comprising such a system and a cloud environment comprising a plurality of such servers in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

As used herein, the term "in response to" may be construed to mean "when or "upon" or "if" depending on the context. Similarly, the phrase "in response to determining" or "if it is determined' or "when it is determined" or "in an instance of" may be construed to mean "upon determining" or "upon detecting and identifying occurrence of an event" or "in response to detecting occurrence of an event" depending on the context. Accordingly, the phrase "in response to X being equal to Y" may be construed as "when X equals Y", "if X equals Y", "when it is determined that X equals Y", or "in response to detecting/determining that X equals Y" depending on the context.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

### Overview

As mentioned, the training of machine-learning algorithms, such as artificial neural networks, to be used for automated driving systems, often requires large amounts of annotated or "labelled" data. In the case of perception models that are tasked to perform predictions of the properties of various road model objects, the required training data could for instance include annotations defining the properties of lane-delimiters, pedestrian crossings, grass-field edges, curbs, snow, barriers, walls, gravel, sand, dirt, ditches, and so forth on a large number of camera images.

The performance a neural network can achieve in solving its goal depends on the quality and size of the dataset it is trained with. However, large quantities of high-quality annotated data are extremely time consuming and/or costly to obtain. This is particularly true for annotations of the properties, such as the colour (e.g., white or yellow) and type (e.g., virtual, dashed or solid), of road model objects such as lane delimiters or road delimiters. This is because annotating the geometries of the road model objects (e.g., lane delimiters) is relatively straight forward by for example drawing polylines in 3D coordinate space. However, selecting and inputting properties of those road model objects require that the annotators undergo rigorous training in order to minimize errors. Even with such training, mistakes still occur, necessitating Quality Assessment (QA) reviews that further increase the cost and time required for providing the annotated datasets.

Therefore, embodiments herein provide a solution for annotating properties of road model objects in large datasets that leverages the recent advancements in foundation models in a new and improved manner in order to reduce the time consumption and costs associated with annotating large datasets that can be used to train machine-learning algorithms to be used in automated driving systems. In more detail, these annotated datasets can be used to train machine-learning algorithms to predict or assign properties for various road model objects such as for example the colour and type of lane delimiters (may also be referred to as "lane markers") that are present in a camera image.

Furthermore, with the recent and rapid developments of foundation models one could easily assume that one would be able prompt them to detect and classify all kinds of road model objects for generating training data for various perception models used in Automated Driving Systems. However, while this may be true for many "everyday objects" such as humans, cats or dogs in photos, it turns out that these foundation models struggle with providing accurate annotations of the properties of road model objects depicted in camera images. This unsatisfactory result was present regardless of the assigned task, meaning that it did not matter if the foundation models were prompted to generate bounding boxes (object detection), semantic segmentation or key-point extraction, the output from the foundation models were consistently unsatisfactory for assigning properties of road model objects. Evidently, current state of the art foundation models struggle to properly identify and annotate road model objects, such as lane delimiters, and can therefore not be relied upon to assign properties to the same, at least not in an obvious and straight-forward manner.

Thus, for geometry understanding in complex real-driving scenarios, these foundation models are not directly applicable. They are primarily designed for general tasks such as general object detection, depth estimation, or segmentation. Similarly, while many foundation models can holistically interpret images and interactively respond to text prompts, they lack the capability to detect specific geometries and reason deeply about real-life driving scenes.

This underscores the need to bridge the gap between the requirements of real-driving scene understanding and the current capabilities of foundation models. Addressing this gap is important for advancing the efficiency and accuracy of annotation processes in automotive applications.

To this end, embodiments herein propose a process that involves using 3D polyline annotations of a set of road model objects represented by 3D point clouds in 3D space in order to automatically generate a prompt for a trained foundation model to assign properties to the set of road model objects in an associated camera image. Accordingly, a selection of suitable camera images is performed by cross-referencing the 3D polyline annotations with a large set of camera images that were captured during the same time as the 3D point clouds to be provided as an input to the trained foundation model together with the generated prompt. The output from the trained foundation model is then parsed in order to obtain the property annotations in a structured data interchange format (e.g., JSON) and to obtain annotated images that visualize the foundation model's annotations. The annotated images can later be used for Quality Assurance.

### Definitions

In the context of the present disclosure, the term "annotation" refers to the process of labelling or marking specific objects, features, or attributes within data, typically images or videos, to create a labelled dataset for training and evaluating machine learning models. Annotations provide the ground truth or reference information that allows algorithms to learn and make predictions about objects, regions of interest, or characteristics within the data.

For example, for object detection tasks, annotation involves drawing bounding boxes around objects of interest in images or videos and/or specifying the class of the object (e.g., car, pedestrian, traffic sign). This labelled data is used to train ML algorithms to identify and locate objects in new data. Further, for semantic segmentation, each pixel in an image is labelled with a class identifier, assigning a category to every part of the image. This fine-grained labelling helps ML algorithms understand the layout and categories of objects within the image. Moreover, instance segmentation combines object detection and semantic segmentation. It not only identifies object categories but also assigns a unique identifier to each instance of the object, enabling models to distinguish between individual objects of the same class. In image classification tasks, each image in the dataset is labelled with a single class or category (e.g., "cat" or "dog"). This allows models to learn to classify new, unlabelled images into predefined categories.

In the present context, a "Machine Learning Algorithm" refers to a computational model or set of techniques that are used to enable a computer to solve a task, such as for example, the vehicle's perception system to interpret and understand the surrounding environment. Perception tasks in Automated Driving Systems (ADSs) involve the vehicle's ability to detect and recognize objects, obstacles, road signs, lane markings, pedestrians, other vehicles, and various environmental conditions. The ADS uses machine learning algorithms to process sensor data, such as data from cameras, LiDAR, radar, and other sensors, to make informed decisions about how to navigate safely. These algorithms use data-driven techniques to analyse and classify objects, understand the road geometry, predict the movement of other road users, and/or assess potential risks in real-time. Common types of machine learning algorithms used in ADS perception tasks include deep neural networks, convolutional neural networks (CNNs) (e.g., for camera image processing, LiDAR output processing, etc.), recurrent neural networks (RNNs) (e.g., for sequence data), and various other techniques like support vector machines (SVM) and decision trees.

The machine-learning algorithms (may also be referred to as machine-learning models) are implemented in some embodiments using publicly available suitable software development machine learning code elements, for example, such as those which are available in PyTorch, TensorFlow/Keras, JAX or in any other suitable software development platform, in any manner known to be suitable to someone of ordinary skill in the art.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, LiDAR, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. For the purpose of conciseness, term "ADS" in used herein as an umbrella term encompassing both ADAS and AD. Moreover, an ADS function or ADS feature may in the present context be understood as a specific function or feature of the entire ADS stack, such as e.g., a Highway Pilot feature, a Traffic-Jam pilot feature, a path planning feature, and so forth.

In the context of the present disclosure, the term "3D point cloud" refers to a collection of data points in a three-dimensional coordinate space, where each individual data point is associated with at least three spatial coordinates. These data points may be generated or acquired by one or more sensors, such as LiDAR, radar, or stereo cameras, that capture positional and depth information about objects and surroundings. In automated driving systems, 3D point clouds provide a spatial representation of the vehicle's environment, enabling functionalities such as object detection, localization, and path planning by depicting the shapes, positions, and relative distances of relevant features within the driving scene.

In the context of the present disclosure, the term "3D polyline" may be understood as a piece-wise-linear geometric primitive that approximates a road object, such as a lane delimiter or a curb edge, inside a 3-D coordinate frame derived from suitable sensor data such as LiDAR or stereo point-cloud data. More concretely, a 3D polyline may be defined by an ordered vertex list, P=[(x₀, y₀, z₀), (x₁, y₁, z₁), ... (xₙ, yₙ, zₙ)], expressed in a global coordinate frame or a sensor-local coordinate frame, and straight segment connectivity where consecutive vertices are implicitly connected by straight line segments. In practice the geometry may be stored and exchanged as a 3-D LineString or an equivalent vector primitive in formats such as OGC Simple Features, OpenDRIVE, Lanelet2, PCD/JSON, or proprietary HD-map schemas. During annotation, humans or algorithms place the vertices directly on the point cloud where the road model objects (e.g., physical lane paint) appears.

In the context of the present disclosure, the term "foundation model" refers to a large-scale machine learning model trained on extensive and generally broad datasets to capture foundational patterns, representations, or features relevant to a wide range of potential downstream tasks. This type of model often employs advanced deep neural network architectures, such as transformers, to learn from diverse sources of textual, visual, or multimodal data. Due to the breadth and depth of its training, a foundation model can be readily adapted or fine-tuned for specialized applications without requiring the creation of an entirely new model architecture for each use case. Examples of foundation models include, but are not limited to (multimodal) Large Language Models (LLMs), such as GPT and BERT, or Vision Models, such as SAM or ViT.

In the context of the present disclosure, the term "prompt" refers to a data input, often in the form of text, a query, or other structured instructions, provided to a foundation model for the purpose of eliciting a specific output or behaviour. Depending on the nature of the foundation model (e.g., language-based, vision-based, or multimodal), prompts may include textual descriptions, partial imagery, and/or other relevant data. The prompt serves to guide or focus the model's underlying general-purpose representations and capabilities, enabling it to produce tailored responses, generate new content, or perform targeted tasks in accordance with the user's instructions.

In the context of the present disclosure, the term "parsing" refers to a process of taking raw, often loosely formatted text or tensor output that a machine-learning model emits and analytically walks through it to recover the explicit pieces of information the model intended to convey, then rewrites those pieces into a well-defined target format. For example, the target format may be a structured data interchange format file (such as JSON, XML, Protocol Buffers, or a domain-specific HD-map file). Concretely it may involve (1) recognising the syntactic markers or positional conventions in the model's output (tokens, comma-separated fields, key-value pairs, shape indices, or special end-of-sequence symbols), (2) extracting each value, converting it to the correct data type and units, and (3) assembling those cleaned values under the field names, nesting, and order dictated by the interchange specification. In short, parsing is the controlled translation from the model's "writer-friendly" output to a "machine-to-machine" structure whose grammar and semantics are guaranteed, so that downstream tools can consume the data without guesswork or brittle string manipulation.

In the context of the present disclosure, the term "road model object" refers to geometric features used to represent and characterize a roadway within automated driving systems. Such features include lane-delimiters, whether physical lane markers or virtual boundaries, and road edges (e.g., curbs, grass, gravel, ditches), which delineate the navigable or non-navigable portions of the road. These road model objects capture essential spatial characteristics, such as position, shape, or curvature, and collectively form the underlying structure upon which automated driving functions (e.g., path planning, localization, or manoeuvring) are based.

In the context of the present disclosure, the term "property" in reference to a "road model object" refers to any characteristic or attribute of the road model object that can be deduced from a visual inspection of the road model object. Examples include, but are not limited to, the colour (e.g., white, yellow, orange, red, blue, green), type (e.g., solid, short dashed, long dashed, divider) of lane-delimiters, as well as analogous visual cues for other road edges or boundaries, or if the road model object acts as a divider defining opposite lanes. These properties provide additional descriptive information about the road model object, informing automated driving systems about its nature, condition, or appearance.

### Example Embodiments

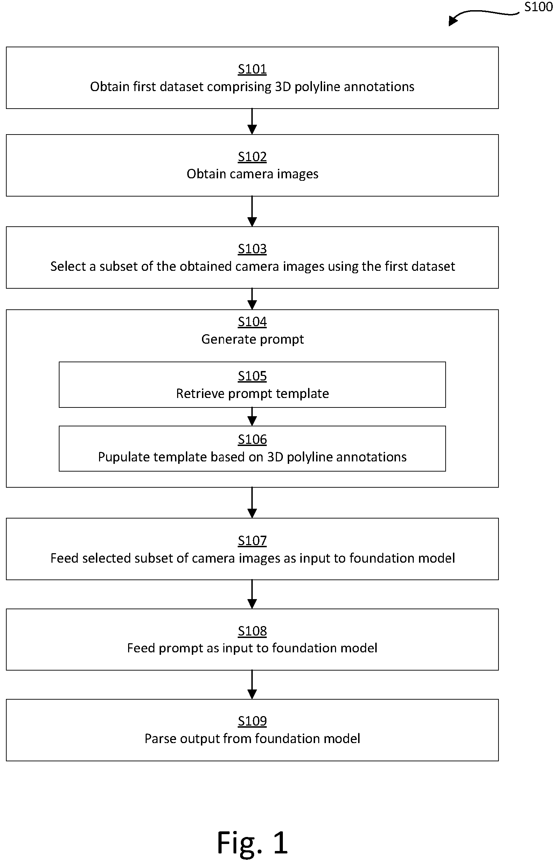

Fig. 1 is a schematic flowchart representation of a method S100 for generating road model annotations for automated driving systems in accordance with some embodiments. The method S100 is preferably a computer-implemented method S100, performed by one or more processors of a computer. In more detail, the computer may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S101 a first dataset comprising 3D polyline annotations of a set of road model objects in a specified environment. In more detail, the first dataset comprises 3D point clouds represented in a 3D space, captured by a LiDAR device over a time period in the specified environment, indicative of a presence of the set of road model objects. In other words, the obtained S101 first dataset may be understood as an annotated 3D representation of a traffic scene as captured by a suitable sensor device, such as a LiDAR device, with point clouds representing various road model objects, such as lane delimiters (or lane markings), pedestrian crossings, road boundaries, and so forth. The annotations outline the general geometry of the road model objects, such as the position and orientation of lane delimiters present in the traffic scene, in the form of 3D polyline annotations.

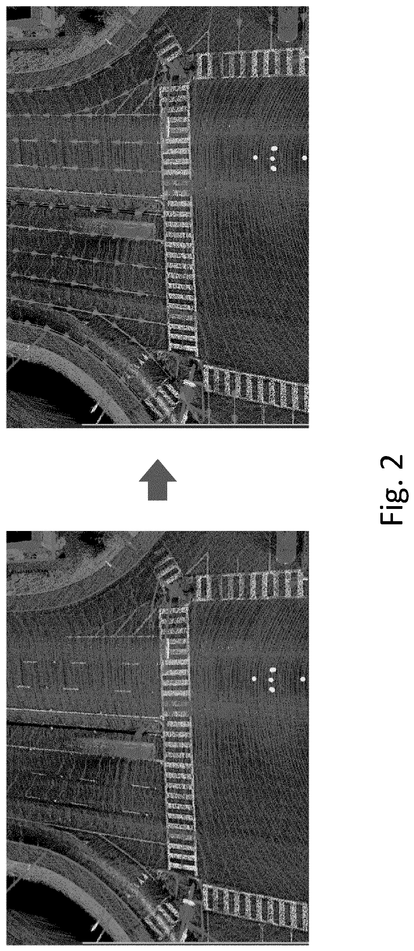

Turning now briefly to Fig. 2, the left-most image shows an example of a traffic scene as captured by a LiDAR device with point clouds indicating the position and shape/geometry of the lane delimiters, pedestrian crossings and other road model objects in the traffic scene. The right-most image then shows the 3D polyline annotations of the lane delimiters.

Reverting to Fig. 1, the method S100 further comprises obtaining S102 a second dataset comprising one or more camera images depicting the specified environment over the time period. In other words, the method S100 further comprises obtaining S102 a set of camera images depicting the same traffic scene during the same period as the one captured by the LiDAR device. The camera images may for example be captured by a vehicle-mounted monocular camera of the vehicle that collected the first dataset.

Further, the method S100 comprises selecting S103 a subset of camera images from the one or more camera images based on the first dataset. In more detail, the purpose of the selection S103 of the subset of camera images is to select images where the road model objects that are represented by the 3D polyline annotations in the first dataset are visible so that their properties can be automatically labelled or annotated. Thus, by using the relative poses between the LiDAR device (capturing the 3D point clouds) and the camera (capturing the camera images) and the time-stamps associated with each dataset, one can extract suitable references images from the second dataset.

In more detail, when the first dataset and second datasets are created, the relative pose between the LiDAR and the camera is known. Thus, one is able to compute the camera pose for each image of the one or more camera images in the 3D space of the 3D point clouds. Therefore, one essentially knows each image's position and orientation for a given 3D scene (as captured by the LiDAR). Next, given the 3D point clouds and the 3D polyline annotations, and by using the camera's extrinsic and intrinsic parameters one can project the 3D polyline annotations to each image of the one or more camera images of the second dataset to see if the road model objects tagged by the 3D polyline annotations are captured within that image (i.e., within the camera's field of view at the point in time when the image was taken). Next, one can automatically select S103 all or some of the images where the road model objects tagged by the 3D polyline annotations are represented. Moreover, in addition to this "visibility criterion" (that the tagged road model objects are represented in the selected images), one could employ another criterion to select S103 the images with some reasonable interval distances/times, so that other road users are not blocking the same area of the road.

The method S100 further comprises generating S104 a prompt to a trained foundation model (e.g., a multimodal LLM). The prompt comprises an instruction for the trained foundation model to assign a property of each road model object that is annotated (by the 3D polylines) in the obtained first dataset. Moreover, the instruction is automatically generated based on the obtained first dataset. In other words, the method S100 comprises automatically generating a prompt (e.g., a textual prompt) for a trained foundation model using the 3D polyline annotations of the first dataset.

In more detail, the present inventors realized that in order to provide the trained foundation model with enough information to reason the input image(s), depicting the road model objects whose properties are to be annotated, it needs to know the number of road model objects in the image. For example, in the case of lane delimiter annotations, by using the 3D polyline annotations, one can automatically determine the number of lane delimiters that are present in a given camera image and use this information to automatically generate a sufficiently detailed prompt to the trained foundation model. For instance, if there are three lane delimiters in one or more camera image that is to be annotated, the generated S104 prompt could include "there are 3 lane delimiters in this image" or "there are 3 lane delimiters in these images". The number 3 would be automatically retrievable from the obtained S101 first dataset. The prompt generation S104 could be a rule-based function and/or a machine-learning model trained to output a suitable prompt given the first dataset as input. In some embodiments, the generated S104 includes a description of the number of road model object instances and the property or properties to be determined.

By leveraging these prompts, trained foundation models can generate structured responses that are easily parsed and seamlessly integrated into annotation pipelines for road model annotations for use in automated driving system. The herein proposed approach reduces the manual effort required while ensuring consistency and scalability in generating annotations. In more detail, the herein proposed architecture has the potential to identify numerous properties critical for an autonomous vehicle's ability to reason about its environment. For instance, a dashed lane delimiter indicates that lane changes are permissible, whereas a solid lane delimiter flanked by two dashed ones suggests that lane crossing is restricted. Additional properties that can be determined include, but are not limited to, cardinality (e.g., single or double lines) and whether the lane delimiter serves as a divider.

An example of a suitable prompt to query the trained foundation model to determine the colour of a road model object in the form of a lane delimiter may be:
*There are 3 lane delimiters in this image. What is the colour of the leftmost lane delimiter? Please respond in the format of a Python dictionary, such as {"leftmost_lane_delimiter": colour}. The colour can be one of the following: "white", "yellow", "orange", "red", "blue", "green", "other", "virtual", or "inconclusive". If you cannot determine the colour, please use "other". If the lane delimiter is occluded or obscured, please use "inconclusive".*

Another example of a suitable prompt to query the trained foundation model to determine the type of a road model object in the form of a lane delimiter may be:
*There are 3 lane delimiters in this image. What is the type of the leftmost lane delimiter? Please respond in the format of a Python dictionary, such as {"leftmost_lane_delimiter": lane_delimiter_type}. The lane delimiter type can only be one of the following: "solid", "short-dashed", or "long-dashed".*

In some embodiments, the generating S104 the prompt to the trained foundation model comprises retrieving S105 a prompt template, and populating S106 the retrieved prompt template based on the obtained S101 first dataset so to form the instruction for the trained foundation model to assign the property of each road model object that is annotated in the obtained S101 first dataset.

In reference to the first example above, the template may essentially be the entire prompt except for the number "3" specifying the number of lane delimiters in the image. Here, the number may be represented as a variable in the template that is determined using the obtained S101 first dataset.

The method S100 further comprises feeding S107 the selected S103 subset of camera images of the second dataset and feeding S108 the generated S104 prompt to the trained foundation model. The trained foundation model accordingly processes the prompt and the selected subset of camera images, and the method S100 further comprises parsing S109 an output from the trained foundation model. In more detail, the output is parsed S109 so to generate a file in a structured data interchange format and one or more annotated images comprising annotations indicative of the assigned property of each road model object of the set of road model objects in the one or more camera images. The structured data interchange format file comprises annotations indicative of the assigned property of each road model object of the set of road model objects. The structured data interchange format file may for example be is a JSON file, a YAML file, an XML file, a CSV file, a TSV file, or a binary format file.

Moreover, in some embodiments, the method S100 further comprises calculating regions of interest for the trained foundation model in the selected S103 subset of camera images. In more detail, it is beneficial for the trained foundation model to know the region of interest areas in each of the selected S103 subset of images in order to not "waste" computational resources analysing irrelevant areas in the camera images, and also to reduce the risk of errors. Alternatively, one could feed the obtained S101 first dataset to the trained foundation model and have it deduce any regions of interest by itself.

As mentioned, the assigned property is a colour of each road model object or a type of road model object. For example, the colour may be white, yellow, red, orange, etc. or even "virtual". In reference to the latter, a "virtual" lane delimiter may for example be observed on rural roads where there are no visible lane delimiters, but a "virtual" lane delimiter may be deduced based on the ego-vehicle's (host vehicle's) positioning on the road in combination with the positioning of other vehicles driving on the same road. Moreover, types of road model object may for example be dotted lane lane-delimiter, solid line lane-delimiter, broken line lane-delimiter, profile/rumble-strip line lane-delimiter, road edge defined by gravel, road edge defined by curb, or road edge defined by grass. In some embodiments, where the road object is in the form of a lane-delimiter, the assigned property may further include a cardinality of the lane-delimiter, such as for example double lines. Together with the type the annotation may indicate if it is a double solid line lane-delimiter, double broken line lane-delimiter, or a combination of solid and broken line lane-delimiter.

Furthermore, in some embodiments, the selected S103 subset of camera images comprises a consecutive sequence of camera images. Some properties of road model objects (such as long-dashed lane delimiters) are very difficult, or sometimes even impossible to determine from a single camera image. Therefore, one can feed the trained foundation model with multiple consecutive images and the prompt generation S104 can also automatically account for this by including the number of images/frames that the foundation model needs to account for in the prompt (i.e., the number of images comprised in the selected S103 subset).

The exact number of camera images and the interval between them may depend on the speed of the vehicle (that is acquiring the first and second sets of sensor data) and the desired property. For example, if the road model objects are lane delimiters, then the long-dashed lines may be 39 meters long, so to ensure there is a gap between lane delimiters for the foundation model to be able to make a proper assessment in two images/frames, one would need roughly 20 meters between individual frames to be able to determine if a lane delimiter is a long-dashed one. It should be noted that numbers are examples and the distance between lane delimiters depends on the regulations of the country in which the images are captured. Optionally, also the output (annotated images) may be in the form of a consecutive sequence of annotated images.

Moreover, an advantage of using the annotated 3D point clouds for selecting S103 cross-referenced camera images is that one can ensure that the selected S103 camera images depict the gap between lane delimiters by discarding images where the expected gap is occluded by an object (which would be evident from the 3D point clouds). For example, one could employ an object detection model to find potential occluding objects in the 3D point clouds and therefore omit the associated camera images as the road object that one would want to annotate is likely to be occluded.

Furthermore, another advantage of feeding a consecutive sequence of camera images to the trained foundation model is that the trained foundation model may more easily identify virtual dividers, particularly in rural areas where no lane markers are visible. In such cases, foundation models such as multimodal LLMs can still infer whether a virtual centre lane delimiter functions as a divider by analysing consecutive camera images. For example, if one imagines a two-way street with no visible lane markers and if a vehicle is observed driving in the opposite direction relative to the ego-vehicle, the foundation model can deduce the existence of a virtual divider based on the two vehicles movement and relative positioning.

Furthermore, in some embodiments the output from the trained foundation model further comprises a confidence score associated with each assigned property. As mentioned, the parsed S109 output from the foundation model includes a "visualization" component in the form of one or more annotated images that serve to visualize the final annotations made by the foundation model. These annotated images can be used for quality assurance purposes in order to verify that the annotations in the structured data interchange format file are correct. By further including confidence scores in the annotated images, the quality assurance process can be facilitated as it directly indicates the annotations that should be reviewed.

Executable instructions for performing these functions are, optionally, included in a non-transitory computer-readable storage medium or other computer program product configured for execution by one or more processors.

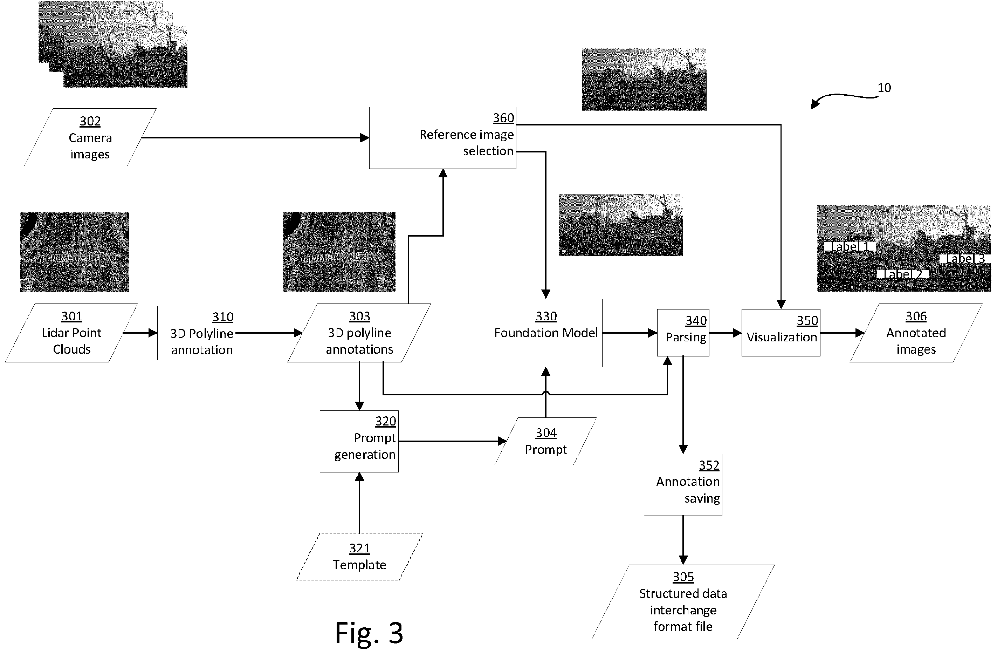

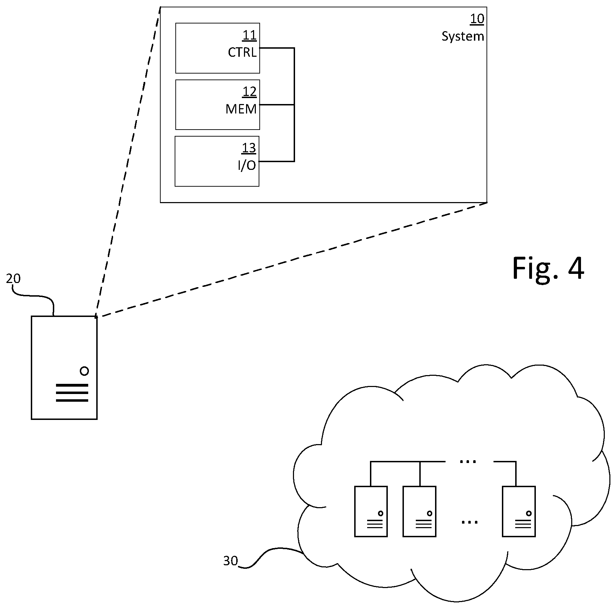

Fig. 3 is a schematic block diagram representation of a system 10 for generating road model annotations for automated driving systems in accordance with some embodiments. As indicated in Fig. 4, the system 10 comprises control circuitry (e.g. one or more processors) 11 configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. The system 10 further has one or more input/output (I/O) interfaces 13 for receiving input data and for outputting output data.

In order to better elucidate the herein disclosed embodiments, the control circuitry 11 is represented as various "modules" or blocks in Fig. 3, each of them linked to one or more specific functions of the control circuitry 11.

Accordingly, the one or more memory storage areas and the program code are configured to, with the one or more processors, cause the system 10 to obtain a first dataset comprising 3D polyline annotations 303 of a set of road model objects in a specified environment. The first dataset comprises 3D point clouds 301 represented in a 3D space, captured by a LiDAR device over a time period in the specified environment, indicative of a presence of the set of road model objects. In the depicted example, the 3D polyline annotations indicate a presence of lane-delimiters in a traffic scene (see Fig. 2). The 3D polyline 303 annotations may be provided manually and the 3D point cloud annotation process is schematically indicated by box 310 in Fig. 3.

Further, the one or more memory storage areas and the program code are configured to, with the one or more processors, cause the system 10 to obtain a second dataset comprising one or more camera images 302 depicting the specified environment over the time period. In other words, the system 10 receives 3D polyline annotations (in 3D coordinate space) of a traffic scene and corresponding camera images of the same traffic scene.

The one or more memory storage areas and the program code are further configured to, with the one or more processors, cause the system 10 to select a subset of camera images from the one or more camera images based on the first dataset. Accordingly, the system 10 has a cross-reference image searching block 360 that selects the camera images that show the corresponding road model objects that are annotated by the 3D polylines. As mentioned in the foregoing, the cross-reference image searching block may be configured to select camera images where the road model objects (whose properties the system is to annotate) are not occluded by other objects by for example selecting images that are sufficiently spaced apart in space or time.

Furthermore, the cross-reference image searching block 360 may be configured to calculate regions of interest for the trained foundation model in the selected subset of camera images. However, as an alternative, the 3D polyline annotations 303 may be fed directly to the trained foundation model 330 that could calculate the region of interest areas in the selected subset of camera images.

Further, the one or more memory storage areas and the program code are configured to, with the one or more processors, cause the system 10 to generate a prompt 304 to a trained foundation model 330. As before, the prompt comprises an instruction for the trained foundation model to assign a property of each road model object that is annotated in the obtained first dataset. Moreover, the instruction is automatically generated based on the obtained first dataset. This process is indicated by the prompt generation block 320 where the 3D polyline annotations are provided as input and a prompt (e.g., a textual prompt) for the foundation model 330 is generated as output. As before, the prompt generation 320 may be a rule-based function and/or a machine-learning model trained to output a suitable prompt given the first dataset as input. For example, the prompt generation function 321 may retrieve a prompt template 321 and populate the template based on the first dataset in order to generate a suitable prompt 304.

Moreover, the one or more memory storage areas and the program code are configured to, with the one or more processors, cause the system 10 to feed the selected subset of camera images of the second dataset and the generated prompt 304 to the trained foundation model 330. Next, the output from the foundation model 330 is parsed (using a suitable parsing function) to generate a file in a structured data interchange format 305 and one or more annotated images 306. The file 305 comprises annotations indicative of the assigned property of each road model object of the set of road model objects and the annotated images comprises annotations indicative of the assigned property of each road model object of the set of road model objects in the one or more camera images. In more detail, once the output from the foundation model 330 has been parsed, the system 10 may be configured to save the parsed output (as indicated by the annotation saving block 352) as a structured data interchange format file (e.g., a JSON file). Moreover, as indicated in Fig. 3, the output from the foundation model 330 is added back to the 3D polyline annotations 303 in order to generate the file in a structured data interchange format 305.

Furthermore, the system 10 may be configured to visualize the parsed output by labelling the selected subset of camera images with the corresponding property annotations, as indicated by the visualization block 350.

Fig. 4 further illustrates a server 20 comprising the system according to any one of the embodiments disclosed herein, and a cloud environment 30 comprising one or more servers 20 according to any one of the embodiments disclosed herein.

The control circuitry 11 may comprise one or more processors, such as a central processing unit (CPU), a graphics processing unit (GPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various association steps, alignment steps, annotation steps, and conversion steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for generating road model annotations for automated driving systems, the computer-implemented method comprising:
obtaining (S101) a first dataset comprising 3D polyline annotations of a set of road model objects in a specified environment, wherein the first dataset comprises 3D point clouds represented in a 3D space, captured by a LiDAR device over a time period in the specified environment, indicative of a presence of the set of road model objects;
obtaining (S102) a second dataset comprising one or more camera images depicting the specified environment over the time period;
selecting (S103) a subset of camera images from the one or more camera images based on the first dataset;
generating (S104) a prompt to a trained foundation model, wherein the prompt comprises an instruction for the trained foundation model to assign a property of each road model object that is annotated in the obtained first dataset, wherein the instruction is automatically generated based on the obtained first dataset;
feeding (S107) the selected subset of camera images of the second dataset to the trained foundation model;
feeding (S108) the generated prompt to the trained foundation model;
parsing (S109) an output from the trained foundation model to generate:
a file in a structured data interchange format, wherein the file comprises annotations indicative of the assigned property of each road model object of the set of road model objects;
one or more annotated images comprising annotations indicative of the assigned property of each road model object of the set of road model objects in the one or more camera images.

2. The computer-implemented method (S100) according to claim 1, wherein the file in a structured data interchange format is a JSON file, a YAML file, an XML file, a CSV file, a TSV file, or a binary format file.

3. The computer-implemented method (S100) according to claim 1 or 2, wherein generating (S104) the prompt to the trained foundation model comprises:
retrieving (S105) a prompt template, and
populating (S106) the retrieved prompt template based on the obtained first dataset so to form the instruction for the trained foundation model to assign the property of each road model object that is annotated in the obtained first dataset.

4. The computer-implemented method (S100) according to any one of claims 1-3, wherein the assigned property is a colour of each road model object or a type of road model object.

5. The computer-implemented method (S100) according to any one of claims 1-4, wherein the selected (S103) subset of camera images comprises a consecutive sequence of camera images and the one or more annotated images comprises a consecutive sequence of annotated images.

6. The computer-implemented method (S100) according to any one of claims 1-5, wherein the output from the trained foundation model further comprises a confidence score associated with each assigned property.

7. A computer program product comprising instructions which, when the program is executed by a computing device, causes the computing device to carry out the method (S100) according to any one of claims 1-6.

8. A computer-readable storage medium comprising instructions which, when executed by a computing device, causes the computing device to carry out the method (S100) according to any one of claims 1-6.

9. A system (10) for generating road model annotations for automated driving systems, the system comprising one or more processors (11) and one or more memory storage areas (12) comprising program code, the one or more memory storage areas and the program code being configured to, with the one or more processors, cause the system (10) to at least:
obtain a first dataset comprising 3D polyline annotations (303) of a set of road model objects in a specified environment, wherein the first dataset comprises 3D point clouds (301) represented in a 3D space, captured by a LiDAR device over a time period in the specified environment, indicative of a presence of the set of road model objects;
obtain a second dataset comprising one or more camera images (302) depicting the specified environment over the time period;
select a subset of camera images from the one or more camera images based on the first dataset;
generate a prompt (304) to a trained foundation model (330), wherein the prompt comprises an instruction for the trained foundation model to assign a property of each road model object that is annotated in the obtained first dataset, wherein the instruction is automatically generated based on the obtained first dataset;
feed the selected subset of camera images of the second dataset to the trained foundation model (330);
feed the generated prompt (304) to the trained foundation model (330);
parse an output from the trained foundation model to generate:
a file in a structured data interchange format (305), wherein the file comprises annotations indicative of the assigned property of each road model object of the set of road model objects;
one or more annotated images (306) comprising annotations indicative of the assigned property of each road model object of the set of road model objects in the one or more camera images.

10. The system (10) according to claim 9, wherein the file in a structured data interchange format (305) is a JSON file, a YAML file, an XML file, a CSV file, a TSV file, or a binary format file.

11. The system (10) according to claim 9 or 10, wherein generating the prompt (304) to the trained foundation model (330) comprises:
retrieving a prompt template (321), and
populating the retrieved prompt template based on the obtained first dataset so to form the instruction for the trained foundation model to assign the property of each road model object that is annotated in the obtained first dataset.

12. The system (10) according to any one of claims 9-11, wherein the assigned property is a colour of each road model object or a type of road model object.

13. The system (10) according to any one of claims 9-12, wherein the selected subset of camera images comprises a consecutive sequence of camera images and the one or more annotated images comprises a consecutive sequence of annotated images.

14. A server (20) comprising the system (10) according to any one of claims 9-13.

15. A cloud environment (30) comprising one or more servers (20) according to claim 14.
